# EUROPEAN PATENT SPECIFICATION

(11) **EP 4 229 031 B1**
(45) Date of publication and mention of the grant of the patent: **05.11.2025**
(21) Application number: 21797989.7
(22) Date of filing: 18.10.2021
(51) Int. Cl.: C07C 251/08, C08G 18/10, C08G 18/32, C08G 18/48, C08G 18/75, C08K 5/00, C09J 175/08, C08G 18/16, C08G 18/24, C09D 175/08, C09D 7/00, C08G 18/79, C08K 3/22, C08K 3/26, C09D 5/00, C08K 5/29

(54) **MOISTURE-CURING POLYURETHANE COMPOSITION**
FEUCHTIGKEITSHÄRTENDE POLYURETHANZUSAMMENSETZUNG
COMPOSITION DE POLYURÉTHANE DURCISSANT À L'HUMIDITÉ

(30) Priority: 19.10.2020 EP 20202654
(43) Date of publication of application: 23.08.2023
(73) Proprietor: Sika Technology AG, 6340 Baar (CH)
(72) Inventor: BURCKHARDT, Urs, 8049 Zürich (CH); KRAMER, Andreas, 8008 Zürich (CH); SCHLUMPF, Michael, 8143 Stallikon (CH); COUPE, Alex, Lancaster Lancashire LA1 3RX (GB)
(74) Representative: Sika Patent Attorneys
(86) International application number: PCT/EP2021/078815
(87) International publication number: WO 2022/084252

(56) References cited:
- WO-A1-2020/030607
- DE-A1- 3 306 373
- US-A1- 2012 220 736

## Description

### Technical field

Moisture-curing polyurethanes with low content of monomeric diisocyanates, particularly for coatings, sealants and adhesives with good UV resistance.

### State of the art

Aldimines and their use in moisture-curing polyurethane compositions are well known. The aldimines serve as so-called latent hardeners or blocked amines. They react with isocyanate groups upon contact with moisture and improve the curing properties of moisture-curing polyurethane compositions, in particular by preventing bubble formation caused by excessive release of carbon dioxide from the reaction of water with isocyanate groups. Particularly suitable are aldimines which are liquid at room temperature, as they enable an easy handling without solvents.

In outdoor coating, sealing and bonding applications, moisture-curing polyurethane compositions typically contain isocyanate-functional polymers based on aliphatic diisocyanates, in particular the cycloaliphatic isophorone diisocyanate, as these provide particularly good UV resistance. When combined with latent hardeners, such compositions cure quickly to form elastic materials. However, they often remain somewhat tacky at the surface and/or have limited mechanical performance regarding tensile strength and modulus of elasticity, making them prone to dirt pickup and/or degradation under outdoor weathering conditions, such as ponding water and UV exposure. These effects are particularly pronounced for compositions with a relatively low isocyanate content, such as low modulus sealants and adhesives, or coatings based on monomer-reduced polymers. Monomeric isophorone diisocyanate, like other small isocyanates, is a toxic and volatile molecule presenting a potential health risk for the applicators. It is therefore advantageous from an EH&S point of view to remove it from the isocyanate-functional polymer, e.g. by distillation.

Compositions with a content of monomeric isophorone diisocyanate below 0.5 weight-%, in particular below 0.1 weight-%, tend to remain tacky for a long time after curing and have limitations in achievable mechanical strength and, in consequence, durability under weathering conditions. These negative effects may be mitigated by the addition of elevated amounts of isocyanate crosslinkers such as oligomers of isophorone diisocyanate, but this, however, leads to an unwanted stiffening of the cured composition with loss of elongation.

WO 2020/030607 describes the use of blocked amines as auxiliary curing agents for moisture-curing polyurethane compositions with a very low content of monomeric isophorone diisocyanate. With the use of well-known blocked amines such as the aldimine derived from isophorone diamine and 2,2-dimethyl-3-(N-morpholino)propanal, these compositions cure to form elastic materials with high elongation. Nevertheless, the mechanical performance, particularly in terms of the modulus of elasticity, does not reach the level of conventional compositions with a high content of monomeric isophorone diisocyanates.

EP 2,132,247 reveals a dialdimine derived from solid bis(4-aminocyclohexyl)methane and 2,2-dimethyl-3-lauroyloxypropanal and its use in conventional (not monomer-reduced) isophorone diisocyanate based polymers. Such an aldehyde has a strong plasticizing effect on the polyurethane polymer, which further reduces the level of mechanical strength that can be achieved in compositions with very low content of monomeric isophorone diisocyanate.

### Summary of the invention

The task of this invention is to provide a moisture-curing polyurethane composition with low toxicity and good UV resistance, which overcomes the drawbacks of state-of-the-art compositions, particularly in terms of surface tackiness and limited mechanical strength.

Surprisingly this task is achieved by the solution provided in the appended claims, i.e. a moisture-curing polyurethane composition comprising a polymer with a low content of monomeric isophorone diisocyanate and an aldimine of the formula (I) according to claim 1. The inventive composition provides isophorone diisocyanate based moisture-curing polyurethanes with a content of monomeric isophorone diisocyanate of below 0.1 weight-%, which form elastic materials with low surface tackiness and remarkable mechanical strength, without having disadvantages in viscosity, shelf life stability or elongation at break. Such compositions are particularly suitable for applications which are exposed to outdoor wheathering conditions, such as elastic coatings for outdoor floors or roofs, or elastic adhesives or sealants for applications with heavy UV load, for example joint sealants on high rise façades or deck caulks on ships and boats.

The inventive composition has a good shelf life stability and a low viscosity. It is easy to apply and has a sufficient open time to allow precise positioning and large surface applications. Nevertheless, the curing process proceeds quickly, whereby the composition soon becomes largely tack-free and shows a fast build-up of mechanical strength and elasticity. The cured material shows high mechanical strength at high elasticity, particularly a high modulus of elasticity at high tensile strength, tear strength and elongation with a high durability under outdoor weathering conditions, mainly in terms of stability against water and UV light.

Particularly preferred are inventive compositions in which the aldimine of the formula (I) is present in the form of a mixture of isomers containing a low content of the trans,trans isomer. These are particularly easy to handle, without the need of a melting step or the use of solvents, and surprisingly provide the best mechanical properties in terms of tensile strength and/or modulus of elasticity.

Other aspects of the invention are described in other independent claims. Preferred aspects of the invention are described in dependent claims.

### Detailed description of the invention

The subject of the invention is a moisture-curing polyurethane composition comprising
- at least one isocyanate-functional polymer with a content of monomeric isophorone diisocyanate of below 0.5 weight-%, obtained from the reaction of isophorone diisocyanate and at least one polyol, and
- at least one aldimine of the formula (I), 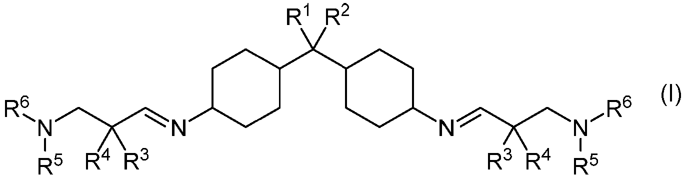 wherein
   R¹ and R² are independently of each other hydrogen or methyl,
   R³ and R⁴ are the same or different C₁ to C₄ alkyls, or are joined together to form a C₄ to C₆ alkylene, and
   R⁵ and R⁶ are the same or different C₁ to C₈ alkyls optionally containing ether oxygen, or are joined together to form a C₄ to C₆ alkylene optionally containing ether oxygen, and containing at least one further ingredient selected from the group consisting of latent hardeners different from aldimines of the formula (I), oligomeric polyisocyanates and stabilizers.

In this document, the term "moisture-curing" refers to a composition, which cures when exposed to moisture.

In this document, the terms "shelf life stability" and "storage stability" refer to the ability of a composition to be stored at room temperature in a suitable container under exclusion of moisture for a certain time interval, in particular several months, without undergoing significant changes in application or end-use properties.

In this document, the term "molecular weight" refers to the molar mass (g/mol) of a molecule or a moiety of a molecule. The term "average molecular weight" refers to the number average molecular weight (Mₙ) of an oligomeric or polymeric mixture of molecules or moieties of molecules. It is determined by means of gel permeation chromatography (GPC) against polystyrene as the standard, particularly with tetrahydrofuran as the mobile phase and a refractive index detector.

In this document, the term "NCO-content" refers to the content of isocyanate groups in weight-%.

In this document, the term "weight-%" refers to the mass fraction of a constituent of a composition based on the entire composition, unless stated otherwise. The terms "weight" and "mass" are used synonymously in this document.

In this document, "room temperature" refers to a temperature of 23°C.

All industry standards and norms mentioned in this document refer to the versions valid at the time of filing the first application.

Preferred is an aldimine of the formula (I) which is liquid at 23°C. Such an aldimine is particularly a mixture of isomeric aldimines of the formula (I) with a low content of the trans,trans isomer, as described below.

Preferably, R¹ and R² are either both hydrogen or both methyl.

Most preferably, R¹ and R² are both hydrogen.

Further preferred is an aldimine of the formula (I), wherein R³ and R⁴ are both methyl.

Further preferred is an aldimine of the formula (I), wherein R⁵ and R⁶ are either both a methoxyethyl group, or are joined together to form a 3-oxa-1,5-pentylen or a 2,4-dimethyl-3-oxa-1,5-pentylene group, which forms together with the nitrogen atom, to which R⁵ and R⁶ are bonded, a morpholine or a 2,6-dimethylmorpholine ring.

Preferably, R⁵and R⁶ are joined together to form a 3-oxa-1,5-pentylen group, which is part of a morpholine ring.

Particularly preferred is an aldimine of the formula (I), wherein R³ and R⁴ are both methyl and R⁵ and R⁶ are joined together to form a 3-oxa-1,5-pentylen group, which is part of a morpholine ring. Such an aldimine of the formula (I) is easily accessible and shows a particularly good shelf life stability when stored together with isocyanate groups in a sealed container.

Aldimines of the formula (I) are preferable used in the form of a mixture of isomers. As the two substituents of each cyclohexyl ring can be in the trans or in the cis position, three isomers are possible: a trans,trans isomer, a cis,trans isomer and a cis,cis isomer, as shown in the following formulas:

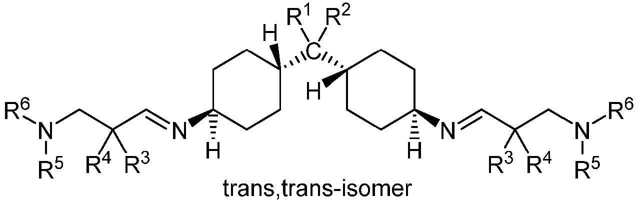

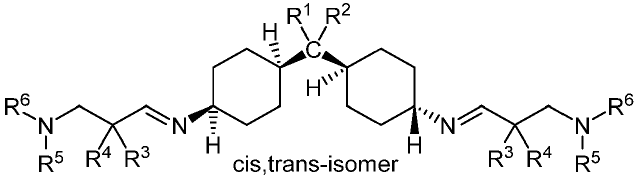

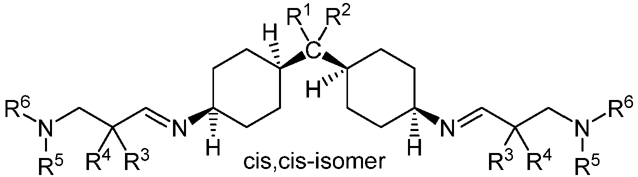

The isomer composition depends on the starting amines used in the preparation of the aldimines of the formula (I). For aldimines of the formula (I), wherein R¹ and R² are both hydrogen, R³ and R⁴ are both methyl and R⁵ and R⁶ are joined together to form a 3-oxa-1,5-pentylen group, a mixture of isomers with a content of the trans,trans isomer of about 20% is liquid at room temperature, whereas a mixture with a content of the trans,trans isomer of 50% or more is solid at room temperature. After melting, such a mixture resolidifies within a few hours to days when stored at room temperature.

Particularly preferred is an aldimine of the formula (I), which is a mixture of isomeric aldimines containing less than 35%, preferably less than 30%, more preferably at most 25%, of the trans,trans isomer.

Particularly preferred is an aldimine of the formula (I), wherein R¹ and R² are both hydrogen, R³ and R⁴ are both methyl and R⁵ and R⁶ are together a 3-oxa-1,5-pentylen group, which forms together with the nitrogen atom, to which R⁵ and R⁶ are bonded, a morpholine ring. This aldimine is N,N'-bis(2,2-dimethyl-3-(N-morpholino)propylidene)-4,4'-methylene-bis(cyclohexylamine).

Particularly preferred is an aldimine of the formula (I), which is a mixture of isomeric N,N'-bis(2,2-dimethyl-3-(N-morpholino)propylidene)-4,4'-methylene-bis(cyclohexylamine) containing less than 35%, preferably less than 30%, more preferably at most 25%, of the trans,trans isomer.

Most preferred is a mixture of isomeric N,N'-bis(2,2-dimethyl-3-(N-morpholino)propylidene)-4,4'-methylene-bis(cyclohexylamine) containing 15 to 25% of the trans,trans isomer.

Surprisingly, the aldimine of the formula (I) is able to compensate a big part of the loss in mechanical properties caused by the lack of monomeric isophorone diisocyanate in a monomer-reduced IPDI-based polyurethane, something which is not achieved to this extent by other known aldimines, also cycloaliphatic ones. The beneficial effect on the mechanical properties is particularly pronounced if the aldimine of the formula (I) is used in the form of the preferred mixture of isomers with a content of the trans,trans isomer of less than 35%. This is most surprising, as one would expect the symmetric and geometrically stretched trans,trans isomer, as a result of strong hard segment stacking, to provide better mechanical properties than the asymmetric cis,cis and cis,trans isomers.

The aldimine of the formula (I) is preferably manufactured in a condensation reaction between at least one amine of the formula (II) and at least one aldehyde of the formula (III).

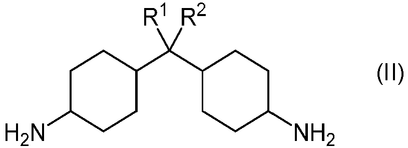

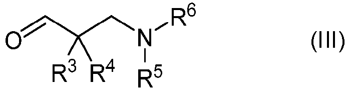

In the formulae (II) and (III), R¹ to R⁶ have the already mentioned meanings.

The stoichiometric ratio between the aldehyde of the formula (III) and the amine groups of the amine of the formula (II) is preferably at least 1, in order to convert all of the amine groups.

The condensation reaction is preferably conducted at a temperature in the range of 15 to 120°C, preferably 20 to 100°C. The water released by the condensation reaction is preferably removed from the reaction product, for example as an azeotrope with a suitable solvent, or preferably by distillation without a solvent.

The condensation reaction is preferably conducted without the presence of a solvent and the water is removed from the reaction product by vacuum distillation. Such a reaction product can be used as aldimine of the formula (I) without further purification.

Preferred amines of the formula (II) are 4,4'-methylene-bis(cyclohexylamine) or 4,4'-isopropyliden-bis(cyclohexylamine), particularly 4,4'-methylene-bis(cyclohexylamine).

Particularly preferred are grades of 4,4'-methylene-bis(cyclohexylamine) which are liquid at room temperature and contain less than 35%, preferably less than 30%, especially at most 25%, of the trans,trans isomer. Suitable liquid grades with a trans,trans isomer content in the range of 15 to 25% are commercially available, for example as Amicure^{®} PACM or Vestamin^{®} PACM (from Evonik) or Wanamine^{®} H₁₂MDA (from Wanhua Chem.). They are preferred over solid grades of 4,4'-methylene-bis(cyclohexylamine) containing more than 35%, in particular about 50%, of the trans,trans isomer, commercially available for example as Dicykan^{®} (from BASF).

Preferred aldehydes of the formula (III) are 2,2-dimethyl-3-di(methoxyethyl)amino-propanal, 2,2-dimethyl-3-(N-2,6-dimethylmorpholino)propanal or 2,2-dimethyl-3-(N-morpholino)propanal, particularly 2,2-dimethyl-3-(N-morpholino)propanal.

The aldimine of the formula (I) may contain small amounts of aldimines of the formula (IV), 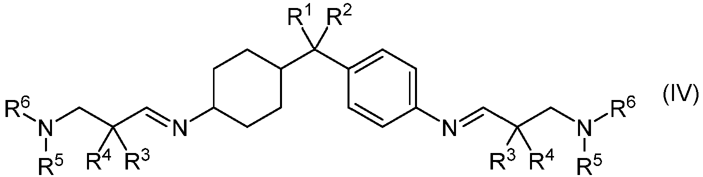 wherein R¹ to R⁶ have the already mentioned meanings.

The aldimine of the formula (I) may also contain portions of the corresponding 2,4'- and/or 2,2'-isomers, in particular the 2,4'-isomer of the formula (IVa), 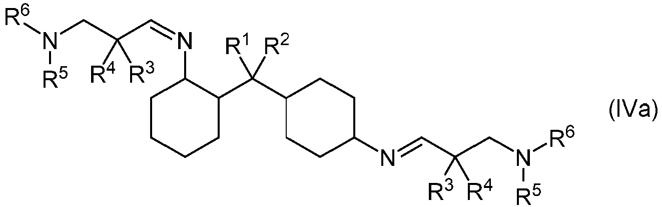 wherein R¹ to R⁶ have the already mentioned meanings.

Preferably, the ratio of the sum of the 2,4'- and the 2,2'-isomers to the aldimine of the formula (I) (i.e. the 4,4'-isomers) is below 20/80, in particular not more than 10/90. In a preferred embodiment it is in the range of 0/100 to 2/98. In a further, particularly preferred embodiment it is in the range of 5/95 to 10/90.

The aldimine of the formula (I) may also contain portions of aldimines of the formula (IVb) and/or (IVc), 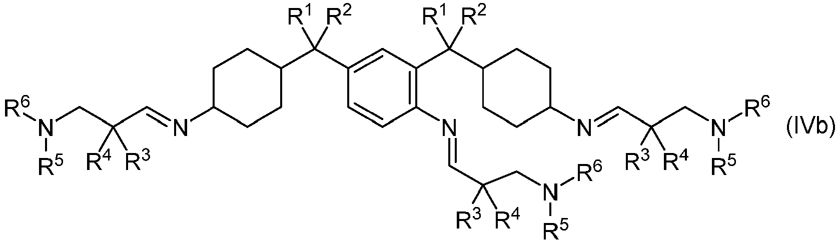 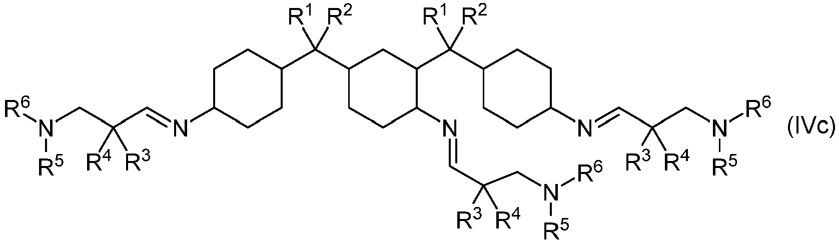 wherein R¹ to R⁶ have the already mentioned meanings.

Preferably, the weight ratio of the sum of the aldimines of the formula (IVb) and (IVc) to the aldimine of the formula (I) is below 30/70.

The moisture-curing polyurethane composition comprises at least one isocyanate-functional polymer with a content of monomeric isophorone diisocyanate of below 0.5 weight-%, obtained from the reaction of isophorone diisocyanate and at least one polyol.

The content of monomeric isophorone diisocyanate in the isocyanate-functional polymer is preferably below 0.3 weight-%, more preferably below 0.2 weight-%. Such an isocyanate-functional polymer enables compositions with an overall content of monomeric diisocyanates of below 0.1 weight-%, which enables a safe use for the applicator without special protective measures and without hazard labeling.

The isocyanate-functional polymer is preferably liquid at room temperature. Preferred are isocyanate-functional polymers of low viscosity, preferably with a viscosity of less than 50 Pa·s, more preferably less than 30 Pa·s, particularly less than 20 Pa·s, measured by a cone-plate-viscometer with a cone diameter of 25 mm, cone angle of 1° at a cone-plate-distance of 0.05 mm and a shear rate of 10 s⁻¹ at 20°C.

The isocyanate-functional polymer preferably has an NCO-content in the range of 1 to 8 weight-%, preferably 1.5 to 6 weight-%.

The isocyanate-functional polymer preferably has an average molecular weight Mₙ in the range of 1'000 to 15'000 g/mol, preferably 1'500 to 12'000 g/mol.

The isocyanate-functional polymer is obtained from the reaction of isophorone diisocyanate and at least one polyol.

Preferably, the reaction is done in a molar NCO/OH ratio of at least 3/1, preferably in the range of 3/1 to 10/1, followed by the removal of most of the remaining monomeric isophorone diisocyanate by a distillation process.

The polyol is preferably selected from the group consisting of polyether polyols, polyester polyols, polycarbonate polyols and polyacrylate polyols.

Preferred are polyether polyols, preferably with repetitive units selected from 1,2-ethyleneoxy, 1,2-propyleneoxy, 1,3-propyleneoxy, 1,2-butyleneoxy and 1,4-butyleneoxy. Particularly preferred are 1,2-propyleneoxy units, optionally in combination with some 1,2-ethyleneoxy units at the end of the chains. Further particularly preferred are 1,4-butyleneoxy units.

Preferred are polyetherpolyols with a content of unsaturation below 0.02 mEq/g, preferably below 0.01 mEq/g.

Preferred are polyoxypropylene diols or triols, which optionally are ethyleneoxide-endcapped, with an OH-number in the range of 10 to 250 mg KOH/g, preferably 20 to 125 mg KOH/g.

The polyol preferably has an average OH-functionality in the range of 1.7 to 3.

Particularly preferred are polyoxypropylene diols, which optionally are ethyleneoxide-endcapped, with an average molecular weight Mₙ in the range of 450 to 12'000 g/mol, preferably 1'000 to 6'000 g/mol.

Particularly preferred are further trimethylolpropane or glycerine started polyoxypropylene triols, which optionally are ethyleneoxide-endcapped, with an average molecular weight Mₙ in the range of 3'000 to 8'000 g/mol.

Particularly preferred are further poly(oxy-1,4-butylene) diols, particularly with an OH-number in the range of 50 to 180 mg KOH/g, particularly with an average molecular weight Mₙ in the range of 650 to 2'000 g/mol.

The molar NCO/OH ratio upon the reaction between isophorone diisocyanate and the polyol is preferably in the range of 3/1 to 10/1, preferably 3/1 to 8/1.

The reaction between isophorone diisocyanate and the polyol is preferably conducted in the absence of moisture at a temperature in the range of 20 to 160°C, preferably 40 to 140°C, possibly in the presence of a suitable catalyst.

After the reaction, the remaining monomeric isophorone diisocyanate is removed from the reaction mixture with a distillation process, preferably by thin film distillation or short path distillation, preferably under vaccum.

Particularly preferred is a multi step process, in which the monomeric isophorone diisocyanate is removed in a short path evaporator at a jacket temperature in the range of 120 to 200°C, preferably 140 to 180°C, at a pressure of 0.001 to 0.5 mbar.

Preferably, the reaction between isophorone diisocyanate and the polyol as well as the removal of the remaining monomeric diisocyanate is conducted in the absence of a solvent or entrainer.

Preferred is an isocyanate-functional polymer with a content of monomeric isophorone diisocyanate of below 0.3 weight-% and an NCO-content in the range of 1 to 10 weight-%, which is obtained from the reaction of isophorone diisocyanate and at least one polyether polyol with an OH-number in the range of 10 to 250 mg KOH/g in a molar NCO/OH-ratio in the range of 3/1 to 10/1, followed by removing most of the monomeric isophorone diisocyanate by a distillation process.

A particularly preferred isocyanate-functional polymer has an NCO-content in the range of 5 to 6 weight-% and is obtained from a polyoxypropylene diol with an OH-number in the range of 110 to 115 mg KOH/g and an average molecular weight Mₙ of approximately 1'000 g/mol. It is particularly suitable for elastic coarings.

Another particularly preferred isocyanate-functional polymer has an NCO-content in the range of 1.7 to 2 weight-% and is obtained from a polyoxypropylene diol with an OH-number in the range of 26 to 30 mg KOH/g and an average molecular weight Mₙ of approximately 4'000 g/mol. It is particularly suitable for elastic adhesives, sealants or coarings.

Another particularly preferred isocyanate-functional polymer has an NCO-content in the range of 1.7 to 2.5 weight-% and is obtained from a possibly ethyleneoxid endcapped polyoxypropylene triol with an OH-number in the range of 26 to 37 mg KOH/g and an average molecular weight Mₙ in the range of 4'500 to 6'000 g/mol. It is particularly suitable for elastic adhesives or sealants.

Another particularly preferred isocyanate-functional polymer has an NCO-content in the range of 2.8 to 7.7 weight-% and is obtained from a poly(oxy-1,4-butylene) diol with an OH-number in the range of 55 to 175 mg KOH/g. It is particularly suitable for elastic coatings with particularly high UV and water resistance.

The composition may contain one or more than one of these isocyanate-functional polymers.

The inventive polyurethane composition preferably contains an amount of monomeric diisocyanates of below 0.1 weight-% in relation to the total composition. Such a composition enables a safe use for the applicator without special protective measures and without hazard labeling.

The polyurethane composition contains at least one further ingredient selected from the group consisting of latent hardeners different from aldimines of the formula (I), oligomeric polyisocyanates and stabilizers.

Preferred such latent hardeners are oxazolidines, bis-oxazolidines or aldimines different from aldimines of the formula (I).

Preferred aldimines different from aldimines of the formula (I) are aldimines of the formula (V), 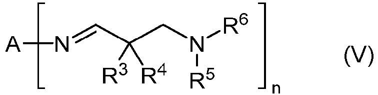 wherein
n is 2 or 3,
A is the residue of a di- or triamine after the removal of the amine groups, wherein the di- or triamine is selected from the group consisting of hexane-1,6-diamine, 2-methylpentane-1,5-diamine, 3-aminomethyl-3,5,5-trimethylcyclohexylamine (iso-phoronediamine), 4(2)-methylcyclohexane-1,3-diamine, 1,3- bis(aminomethyl)-cyclohexane, 1,4-bis(aminomethyl)cyclohexane, 1,3-bis(aminomethyl)benzene, 1,2-diaminocyclohexane, polyoxypropylene diamines with an average molecular weight Mₙ in the range of 200 to 4'000 g/mol and polyoxypropylene triamines with an average molecular weight Mₙ in the range of 380 to 5'000 g/mol,
and R³ to R⁶ have the already mentioned meanings.

Preferably, R³, R⁴, R⁵ and R⁶ are the same groups in the formula (I) and in the formula (V). This means, the aldimine of the formula (I) and the aldimine of the formula (V) are derived from the same aldehyde.

The polyurethane composition preferably contains at least one aldimine of the formula (Va), 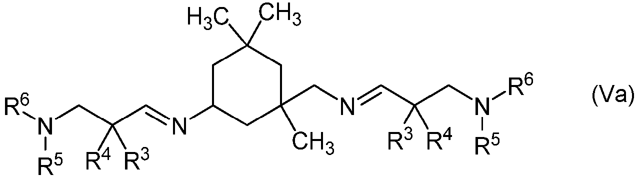 wherein R³ to R⁶ have the already mentioned meanings. This aldimine is obtained from isophorone diamine and enables particularly cost-effective compostions with low viscosity and good mechanical properties.

Preferably, the weight ratio between the aldimine of the formula (I) and the aldimine of the formula (Va) is in the range of 10/90 to 80/20, preferably 20/80 to 75/25, more preferably 30/70 to 70/30, most preferably 40/60 to 60/40. In this ratio range, the composition surprisingly shows a faster cure speed and/or an improved mechanical strength and/or a less tacky surface in comparison to the aldimine of the formula (Va) alone.

The polyurethane composition preferably further contains at least one aldimine of the formula (Vb), 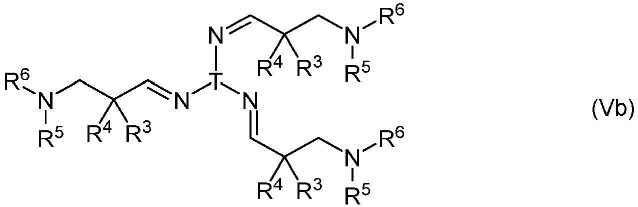 wherein T is the the trifunctional moiety remaining when removing the primary amino groups of a polyoxypropylene triamine with an average molecular weight Mₙ in the range of 380 to 500 g/mol, commercially available e.g. as Jeffamine^{®} T-403 (from Huntsman), and R³ to R⁶ have the already mentioned meanings.

Preferably, the weight ratio between the aldimine of the formula (I) and the aldimine of the formula (Vb) is in the range of 30/70 to 80/20, preferably 40/60 to 70/30.

In a particularly preferred embodiment of the invention, the composition contains at least one aldimine of the formula (Va) and at least one aldimine of the formula (Vb). Preferably, the weight ratio between the aldimines of the formulae (I), (Va) and (Vb) is in the range of 15-45 / 20-50 / 20-50, wherein the sum of the three figures equals 100.

Further preferred aldimines different from aldimines of the formula (I) are aldimines of the formula (VI), 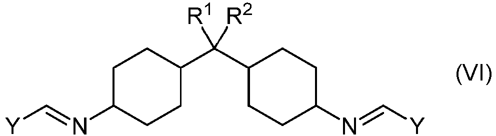
wherein R¹ and R² have the already mentioned meanings, and
Y is a monovalent C₃ to C₂₀ hydrocarbon group optionally containing ether and/or ester groups.

Such a combination enables to specifically tailor the curing behaviour, especially with regard to open time and cure speed.

Preferably, Y is a branched C₃ to C₇ alkyl, particularly isopropyl, or is phenyl or a substituted phenyl, particularly phenyl or a C₁₀ to C₁₄ alkyl substituted phenyl, or is an ester group-containing alkyl, particularly 2,2-dimethyl-2-acetoxyethyl or 2,2-dimethyl-2-lauroyloxyethyl.

Preferably, the weight ratio of aldimines of the formula (VI) to the aldimine of the formula (I) is below 20/80.

In a particularly preferred embodiment Y is isopropyl and the weight ratio of aldimines of the formula (VI) to the aldimine of the formula (I) is in the range of 1/99 to 3/97.

The polyurethane composition preferably further contains an oligomer of isophorone diisocyanate, particularly an isocyanurate of isophorone diisocyanate. Such an oligomeric polyisocyanate can help to achieve a high strength. However, its use is limited to a certain extent, as it can cause a dramatic increase of stiffness with reduction of elongation up to total brittleness when used in a too high amount. For that reason, the loss of mechanical strength by the removal of most of the monomeric isophorone diisocyanate can not be compensated by the addition of an oligomeric polyisocyanate.

Suitable fillers are ground or precipitated calcium carbonates (chalk), which are optionally surface coated with a fatty acid such as stearate, barium sulfate (barytes), slate, silicates (quartz), magnesiosilicates (talc) or alumosilicates (clay, kaolin), dolomite, mica, glass bubbles, silicic acid, particularly highly dispersed silicic acids from pyrolytic processes (fumed silica), carbon black, microspheres, pigments, particularly titanium dioxide or iron oxides, or flame-retarding fillers such as aluminium hydroxides, particularly aluminium trihydroxide (ATH), magnesium dihydroxide, antimony trioxide, antimony pentoxide, boric acid, zinc borate, zinc phosphate, melamine borate, melamine cyanurate, ethylenediamine phosphate, ammonium polyphosphate, di-melamine orthophosphate, di-melamine pyrophosphate, hexabromocyclododecane, decabromodiphenyl oxide and tris(bromoneopentyl) phosphate.

Preferred fillers are chalk, barytes, fumed silica and/or ATH.

Suitable plasticizers are phthalates, particularly diisononyl phthalate (DINP) or diisodecyl phthalate (DIDP), hydrogenated phthalates, particularly hydrogenated DINP, which is diisononyl-1,2-cyclohexane dicarboxylate (DINCH), terephthalates, particularly bis(2-ethylhexyl) terephthalate or diisononyl terephthalate, hydrogenated terephthalates, particularly bis(2-ethylhexyl)-1,4-cyclohexane dicarboxylate, trimellitates, adipates, particularly dioctyl adipate (DOA), azelates, sebacates, citrates, benzoates, glycol ethers, glycol esters, organic sulfonates or phosphates, particularly diphenylcresyl phosphate (DPK), polybutenes, polyisobutenes or plasticizers obtained from natual fats or oils such as epoxidized soy or linseed oil.

Suitable catalysts for the acceleration of aldimine hydrolysis are acid catalysts, particularly carboxylic acids or sulfonic acids, preferably aromatic carboxylic acids such as benzoic acid or salicylic acid.

Suitable catalysts are catalysts for the acceleration of the reaction of isocyanate groups, particularly metal catalysts, preferably dialkyltin complexes, in particular dibutyltin or dioctyltin carboxylates or acetoacetonates such as dibutyltindilaurate (DBTDL), dibutyltindi(acetoacetate) (DBT(acac)₂) or dioctyltindilaurate (DOTDL), or amine catalysts, preferably tertiary aminoethers, in particular 2,2'-dimorpholinodiethylether (DMDEE).

Preferred stabilizers are UV stabilizers and or heat stabilizers, particularly UV absorbers such as 2-cyano-3,3-diphenylacrylic acid ethyl ester, or hindered amine light stabilisers (HALS), such as bis(1,2,2,6,6-pentamethyl-4-piperidyl) sebacate.

The polyurethane composition may further contain the following ingredients:
- other isocyanate-functional polyurethane polymers;
- isocyanate-functional compounds obtained from small diols such as 1,2-ethanediol, 1,3-propanediol, 1,4-butanediol, 1,5-pentanediol, 3-methyl-1,5-pentanediol, 1,6-hexanediol, neopentyl glycol or diethylene glycol, particularly from 1,4-butanediol;
- organic solvents, particularly acetone, methyl ethyl ketone, methyl n-propyl ketone, diisobutyl ketone, methyl isobutyl ketone, methyl n-amyl ketone, methyl isoamyl ketone, acetyl acetone, mesityloxide, cyclohexanone, methylcyclohexanone, methyl acetate, ethyl acetate, propyl acetate, butyl acetate, tert.butyl acetate, 1-methoxy-2-propylacetate, n-butyl propionate, ethyl-3-ethoxy propionate, diethyl malonate, diisopropyl ether, dibutyl ether, ethylene glycol diethylether, ethylene glycol monopropylether, ethylene glycol mono-2-ethylhexylether, diethylene glycol diethylether, propylal, butylal, 2-ethylhexylal, dioxolane, glycerol-formal, 2,5,7,10-tetraoxaundecane (TOU), toluene, xylenes, heptanes, octanes, diisopropylnaphthalenes, petroleum fractions such as naphtha, white spirits or petroleum ethers such as Solvesso^{™} solvents (from Exxon), hydrogenated naphtha, methylene chloride, propylene carbonate, dimethyl carbonate, butyrolactone, N-methyl-pyrrolidone, N-ethyl-pyrrolidone, p-chlorobenzotrifluoride or benzotrifluoride;
- fibres, particularly glass fibres, carbon fibres, metallic fibres, ceramic fibres, plastic fibres, particularly polyamide fibres or polyethylene fibres, or natural fibres such as wool, cellulose, hemp or sisal;
- nanofillers such as graphene or carbon nanotubes;
- dyes;
- drying agents, particularly molecular sieves, calcium oxide, highly reactive isocyanates such as p-tosylisocyanate, mono-oxazolidines such as Incozol^{®} 2 (from Incorez) or orthoformic acid ester;
- adhesion promoters, particularly organoalkoxy silanes such as 3-glycidoxypropyltrimethoxysilane, 3-glycidoxypropyltriethoxysilane, (meth)acrylosilanes, anhydridosilanes, carbamatosilanes, alkylsilanes or iminosilanes, or oligomers thereof, or titanates;
- thickeners, such as bentonites, derivates of castor oil, hydrogenated castor oil, polyamides, polyamide waxes, polyurethanes, urea compounds, fumed silica, cellulose ethers or hydrophobically modified polyoxyethylenes;
- natural resins, fats or oils such as rosin, shellac, linseed oil, castor oil or soybean oil;
- non-reactive polymers, particularly homo- or copolymers of unsaturated monomers, particularly ethylene, propylene, butylene, isobutylene, isoprene, vinylacetate or alkyl(meth)acrylates, preferably polyethylene (PE), polypropylene (PP), polyisobutylene, ethylenevinyl acetate copolymers (EVA) or atactic poly-α-olefins (APAO);
- additives such as wetting agents, flow enhancers, leveling agents, defoamers, deaerating agents, stabilizers, antioxidants or biocides.

The composition preferably contains an amount of isocyanate-functional polymers in the range of 15 to 80 weight-%, particularly 20 to 50 weight-%, in relation to the total composition.

The composition preferably contains an amount of aldimines of the formula (I) in the range of 0.5 to 25 weight-%, preferably 1 to 20 weight-%, in relation to the total composition.

The composition preferably contains such an amount of aldimines, that the ratio between the total number of aldimine groups to the total number of isocyanate groups is in the range of 0.3 to 1, preferably 0.4 to 1, more preferably 0.5 to 1.

The composition preferably contains an amount of oligomer of isophorone diisocyanate in the range of 0 to 10 weight-%, preferably 0.1 to 5 weight-%, in relation to the total composition.

The composition preferably contains an amount of plasticizers in the range of 0 to 40 weight-%, preferably 10 to 30 weight-%, in relation to the total composition.

The composition preferably contains an amount of fillers in the range of 0 to 80 weight-%, preferably 20 to 60 weight-%, in relation to the total composition.

In a preferred embodiment of the invention, the composition further contains at least one flame-retarding ingredient, preferably a flame-retarding filler and/or a flame-retarding plasticizer. Such a composition is particularly preferred as coating for the waterproofing of buildings, particularly on roofs.

A preferred flame-retarding filler is aluminium trihydroxide (ATH). A preferred flame-retarding plasticizer is diphenylcresyl phosphate (DPK).

A particularly preferred composition contains at least one aluminium trihydroxide filler. Such a composition is particularly preferred as coating for the waterproofing of buildings. Preferably, it further contains at least one oligomer of isophorone diisocyanate.

The composition preferably contains a low amount of volatile organic solvents with a boiling point at atmospheric pressure below 200°C. Preferably, it contains not more than 200 g of such volatile organic solvents, more preferably not more than 150 g, per liter of the total composition. Such a composition is particularly suitable as coating for the waterproofing of buildings.

For other uses, such as adhesives or joint fillers, the composition preferably contains an even lower content of volatile organic solvents with a boiling point at atmospheric pressure below 200°C, preferably less than 10 weight-%, more preferably less than 5 weight-%, most preferably less than 1 weight-%, in relation to the total composition.

The moisture-curing polyurethane composition is preferably formulated as a single-pack composition, prepared by mixing all ingredients under exclusion of moisture to obtain a macroscopically homogeneous fluid or paste and stored in a moisture-tight container at ambient temperatures. A suitable moisture-tight container consists preferably of an optionally coated metal or plastic. It is preferably a bucket, a barrel, a hobbock, a bag, a sausage, a cartridge, a can, a bottle or a tube. With suitable packaging and storage, the single-pack moisture-curing polyurethane composition shows a good shelf life stability.

The process of curing begins when the moisture-curing composition is applied and gets in contact with moisture, especially atmospheric moisture. Upon curing, the isocyanate groups react under the influence of moisture with the hydrolyzing aldimine groups. Further isocyanate groups, particularly the isocyanate groups which are present in excess to the aldimine groups, react with each other under the influence of moisture. As a result of these reactions, the composition cures to form an elastic material. In the course of the curing reaction, an aldehyde of the formula (III) is released. Such an aldehyde is of very low smell and partly remains in the cured composition, where it is well compatible with the polymer and doesn't show a pronounced tendency for migration.

Another subject of the invention is the cured composition, which is obtained from the moisture-curing polyurethane composition after its contact with moisture.

The moisture for the curing of the composition preferably is atmospheric moisture penetrating into the composition from the surrounding air via diffusion processes. Upon curing, first a thin skin of cured composition is formed at the surface of the applied composition, which continuously grows in thickness as the curing process proceeds, until all of the applied composition is cured. Additional moisture contributing to the curing process may come from the substrates, to which the composition is applied, and/or from a water-containing or water-releasing accelerator component, which is mixed into the composition before or during its application, or is sprayed or brushed onto the surface of the applied composition.

The moisture-curing polyurethane composition is preferably applied at ambient conditions, preferably in a temperature range of -10 to 50°C, more preferably -5 to 45°C, particularly 0 to 40°C.

The curing of the composition preferably also takes place at ambient conditions.

The moisture-curing polyurethane composition has a sufficient open time to allow precise positioning and large surface applications and a fast curing progress, whereby the composition soon becomes tack-free and shows a fast build-up of mechanical strength and elasticity.

"Open time" is the time period, within which the applied composition can be processed or reworked without any negative effect. It is over when the viscosity of the composition due to progressing curing has risen too much, at the latest when a skin is formed on the surface. The time period, until a skin is formed on the surface, is called "skin formation time" or "skinning time".

The moisture-curing polyurethane composition is preferably used as an elastic adhesive and/or sealant or as an elastic coating.

As an elastic adhesive and/or sealant, the composition is particularly suitable for uses in the construction or manufacturing industry or in vehicle construction, particularly for parquet bonding, assembly or module bonding, or as joint or cavity sealing and caulking, for example for high rise façades or shipdecks, which are exposed to particularly high UV load.

As an elastic coating, the composition is particularly suitable to seal and protect buildings or parts of a building, such as a bridge, a balcony, a terrace, a roof, particularly a flat or a slightly sloping roof, a roof garden, or in the inner parts of a building under ceramic tiles in wet rooms or kitchens, or in sumps, channels, shafts, silos, tanks or wastewater treatment plants.

It can also be used for repair purposes, particularly on damaged roof membranes, floor coverings or sprayed membranes.

The moisture-curing polyurethane composition may be formulated in such a way, that it has a pasty consistency with pseudoplastic properties. Such a composition is preferably applied from a cartridge, a barrel or a hobbock, for example in the form of a bead with a round or triangular cross-sectional area.

The moisture-curing polyurethane composition may further be formulated in such a way, that it has a fluid consistency with self-leveling properties, optionally with a slight thixotropy. Such a composition can be applied by spraying or pouring onto a flat or slightly sloped surface. To form an even coating, the composition can then optionally be spread to the desired layer thickness with a suitable tool, such as a squeegee, a toothed trowel, a spatula, a roller, a brush or a draw down bar. A layer thickness in the range of 0.5 to 3 mm, preferably 0.5 to 2 mm, is typically applied in one step.

Suitable substrates, onto which the composition is typically applied, are particularly
- concrete, lightweight concrete, mortar, cement, fiber cement, brick, adobe, tile, slate, gypsum, gypsum panels, or natural stone, such as granite or marble;
- glass or glass ceramic;
- repair or levelling compounds based on PCC (polymer modified cement) or ECC (epoxy modified cement);
- metals and alloys, such as aluminium, copper, iron, steel, nonferrous metals, including surface-finished metals and alloys, such as galvanized metals or chrome-plated metals;
- asphalt;
- bituminous felt;
- plastics, such as hard or soft PVC, polycarbonate, polystyrene, polyester, polyamide, PMMA, ABS, SAN, epoxide resins, phenolic resins, PUR, POM, TPO, PE, PP, EPM or EPDM, in untreated form or surface-treated by means of plasma, corona or flame;
- fibre reinforced plastics such as carbon fibre reinforced plastics, glass fibre reinforced plastics or sheet moulding compounds;
- timber or plywood, paper, cardboard, wood materials bonded with organic resins, resin-textile composites or so-called polymer composites;
- insulating foams, particularly out of EPS, XPS, PUR, PIR, rock wool, glass wool or foamed glass;
- coated substrates, such as varnished tiles, painted concrete, coated metals or varnished metal sheets.

These substrates are optionally pre-treated before the application of the composition, particularly by a physical and/or chemical cleaning process or by the application of an activator or primer.

It is possible to bond or seal two identical or two different substrates.

Another subject of the invention is a method to make an elastic adhesive or sealing bond, comprising the steps of
(i) applying the moisture-curing polyurethane composition
   - onto a first substrate and contacting the composition with a second substrate within the open time of the composition, or
   - onto a first and onto a second substrate and join the two substrates within the open time of the composition, or
   - between two substrates,
(ii) followed by curing the composition by contact with moisture.

For this method, the composition preferably has a pasty consistency and a content of volatile organic solvents below 5 weight-%.

Another subject of the invention is a method to make an elastic coating and/or sealing, comprising the steps of
(i) applying the moisture-curing polyurethane composition onto a substrate
(ii) curing the composition by contact with moisture.

For this method, the composition preferably has a liquid, low viscous consistency.

In one preferred embodiment, the elastic coating is part of an elastic waterproofing system.

In another preferred embodiment, the elastic coating is a part of a floor system, particularly an outdoor floor system, preferably on a balcony, a terrace, a foot-bridge or a staircase.

An elastic coating preferably contains a combination of at least one oligomeric polyisocyanate and an isocyanate-functional polymer with an NCO-functionality of not more than 2. Preferably, it further contains at least one aldimine of the formula (VI).

Preferably, it has a Beck-Koller dry-time of not more than 24 hours, preferably not more than 15 hours, an elongation at break of at least 250%, preferably at least 300%, and a Young's modulus of at least 15 MPa, preferably at least 18 MPa, measured as given in the examples under the title "moisture-curing polyurethane coatings".

Another subject of the invention is a waterproofing system, consisting of
- optionally a primer and/or an undercoat,
- one or more than one layer of the inventive moisture-curing polyurethane composition, optionally in combination with a fibre reinforcement mesh,
- and optionally a top coat.

In the waterproofing system, the inventive moisture-curing polyurethane composition is preferably applied by pouring it onto a substrate, which is optionally coated with a primer and/or an undercoat, followed by spreading it evenly to the desired layer thickness, typically in the range of 0.5 to 3 mm dry film thickness, particularly in the range of 0.75 to 1.5 mm dry film thickness, particularly with a squeegee, a toothed trowel, a spatula, a roller, or a brush.

In a preferred waterproofing system, a fibre reinforcement mesh is used. The fibre reinforcement mesh is preferably worked into a first layer of the inventive moisture-curing polyurethane composition as long as the composition is still liquid, preferably by incorporating it thoroughly into the liquid layer with a roller or a brush. After the curing of the compostion with the incorporated fibre reinforcement mesh, a next layer of the inventive moisture-curing polyurethane composition is preferably applied, optionally followed by a top.

The fibre reinforcement mesh is preferably a non-woven polyester fibre mesh, or more preferably a non-woven glass fibre mesh.

The fibre reinforcement mesh acts as a reinforcement for the waterproofing system to increase strength and durability. The randomly oriented fibres in the preferred non-woven fibre mesh give a multidirectional strength to the composition while allowing the latter to remain highly elastic. It improves strength, tear resistance and puncture resistance. The non-woven glass fibre mesh shows a particularly easy handling and can easily align with any given surface topography. It is important that the liquid composition thoroughly wets and penetrates the mesh in order to fully incorporate the mesh into the composition.

Further preferred is a floor system, comprising
- optionally a primer,
- optionally an undercoat,
- one or more than one layer of the inventive moisture-curing polyurethane composition, which is optionally in contact with decorative flakes or quartz sand.

The inventive moisture-curing polyurethane composition is thereby preferably applied by applying it onto a substrate, which is optionally coated with a primer and/or an undercoat, typically with a layer thickness in the range of 0.05 to 2 mm, particularly 0.1 to 1.5 mm, particularly with a squeegee, a toothed trowel, a spatula, a roller or a brush.

The inventive moisture-curing polyurethane composition can be used in combination with decorative flakes or quartz sand.

In one embodiment, decorative flakes or quartz sand are sprinkled into a still liquid undercoat, which is then overcoated with the inventive moisture-curing polyurethane composition as a top coat. Such a top coat is preferably free of filler and pigments and has a clear, transparent look.

In a further embodiment, decorative flakes or quartz sand are sprinkled into the still liquid inventive moisture-curing polyurethane composition. After cure, an excess of sand is removed. Such a flake- or quartz sand-broadcasted inventive moisture-curing polyurethane composition is preferably overcoated with a top coat, wherein the top coat may also be an inventive moisture-curing polyurethane composition, optionally a transparent top coat, which is free of fillers and pigments.

As a result of the described uses, an article is obtained, which is bonded, sealed and/or coated with the inventive composition. This article is preferably a building or an infrastructure, or a part of these, preferably a bridge, a roof, a balcony, a terrace, a staircase or a façade, or it is an industrial good or a consumer good, or a part of these, particularly a window, a pipe, a household machine, a car, a bus, a truck, a rail vehicle, a ship, an airplane or a helicopter.

The moisture-curing polyurethane composition described herein has a series of advantages. It is particularly safe for the environment and the applicators, as it contains a very low amount of monomeric isophorone diisocyanate. It cures quickly to form a largely non-tacky elastic material which is very stable against water and UV attack. This allows the use in a waterproofing system on roofs or as an adhesive and/or sealant on ships. And finally, the cured material has excellent mechanical properties, especially a high strength at high elongation. With these features, the inventive composition reaches or exceeds the good properties of corresponding compositions with a high content of monomeric isophorone diisocyanate containing aldimines different from aldimines of the formula (I).

### Examples

The following examples illustrate the present invention without being limiting. "Normal climate" means a temperature of 23±1°C and a relative atmospheric moisture of 50±5% and is abbreviated with "NC".

Unless otherwise stated, chemicals were purchased from Sigma-Aldrich Chemie GmbH and used as received.

The **viscosity** was measured with a thermostated cone-plate-viscometer Rheotec RC30 (cone diameter 25 mm, cone angle 1°, cone-plate-distance 0.05 mm, shear rate 10 s⁻¹).

### Preparation of aldimines:

The **amine content** (total content of free amino and aldimino groups) of the prepared aldimines was determined by titration (with 0.1N HClO₄ in acetic acid against cristal violet) and is given in mmol N/g.

**Aldimine A1:** N,N'-bis(2,2-dimethyl-3-(N-morpholino)propylidene)-4,4'-methylene-bis(cyclohexylamine) containing approx. 20 % of the trans,trans isomer 210.4 g (1 mol) 4,4'-methylene-bis(cyclohexylamine) (Amicure^{®} PACM, containing approx. 20% of the trans,trans isomer, liquid at room temperature, solidification at approx. 15°C, from Evonik) were placed in a round bottom flask under nitrogen atmosphere. Then 359.5 g (2.1 mol) 2,2-dimethyl-3-(N-morpholino)propanal were added under good stirring, followed by removing the volatile contents at 80°C and 10 mbar vacuum. The product obtained was a clear yellow liquid with a viscosity of 13.9 Pa·s at 20°C and an amine content of 7.68 mmol N/g, corresponding to a calculated aldimine equivalent weight of approx. 267 g/Eq.

**Aldimine A2:** N,N'-bis(2,2-dimethyl-3-(N-morpholino)propylidene)-4,4'-methylene-bis(cyclohexylamine) containing approx. 50% of the trans,trans isomer 210.4 g (1 mol) 4,4'-methylene-bis(cyclohexylamine) (Dicykan^{®}, containing approx. 50% of the trans,trans isomer, solid at room temperature, solidification at approx. 38°C, from BASF) were melted at 60°C and placed in a round bottom flask under nitrogen atmosphere. Then 359.5 g (2.1 mol) 2,2-dimethyl-3-(N-morpholino)propa-nal were added under good stirring, followed by removing the volatile contents at 80°C and 10 mbar vacuum. The product obtained was a brownish liquid with a viscosity of 13.9 Pa·s at 20°C, which on cooling to room temperature gradually solidified, with an amine content of 7.68 mmol N/g, corresponding to a calculated aldimine equivalent weight of approx. 267 g/Eq.

**Aldimine A3:** N,N'-bis(2,2-dimethyl-3-(N-morpholino)propylidene)-3-aminomethyl-3,5,5-trimethylcyclohexylamine
170.3 g (1 mol) 3-aminomethyl-3,5,5-trimethylcyclohexylamine (Vestamin^{®} IPD, from Evonik) were placed in a round bottom flask under nitrogen atmosphere. Then 359.5 g (2.1 mol) 2,2-dimethyl-3-(N-morpholino)propanal were added under good stirring, followed by removing the volatile contents at 80°C and 10 mbar vacuum.

The product obtained was a nearly colourless liquid with an amine content of 8.25 mmol N/g, corresponding to a calculated aldimine equivalent weight of approx. 247 g/Eq.

**Aldimine A4:** N,N'-bis(2,2-dimethyl-3-(N-morpholino)propylidene)-1,6-hexanediamine
166.0 g (1 mol) 1,6-hexanediamine solution (70 weight-% in water) were placed in a round bottom flask under nitrogen atmosphere. Then 359.5 g (2.1 mol) 2,2-dimethyl-3-(N-morpholino)propanal were added under good stirring, followed by removing the volatile contents at 80°C and 10 mbar vacuum. The product obtained was a nearly colourless liquid with an amine content of 9.27 mmol N/g, corresponding to a calculated aldimine equivalent weight of approx. 219 g/Eq.

**Aldimine A5:** N,N',N"-tris(2,2-dimethyl-3-(N-morpholino)propylidene) polyoxypropylene triamine
157.1 g (1 mol N) polyoxypropylene triamine of average molecular weight of about 440 g/mol (Jeffamine^{®} T-403, from Huntsman, amine content 6.40 mmol N/g) were placed in a round bottom flask under nitrogen atmosphere. Then 179.8 g (1.05 mol) 2,2-dimethyl-3-(N-morpholino)propanal were added under good stirring, followed by removing the volatile contents at 80°C and 10 mbar vacuum. The product obtained was a nearly colourless liquid with an amine content of 6.44 mmol N/g, corresponding to a calculated aldimine equivalent weight of approx. 320 g/Eq.

**Aldimine A6:** N,N'-bis(2,2-dimethyl-3-(N-morpholino)propylidene)-1,3-bis(aminomethyl)cyclohexane
142.3 g (1 mol) 1,3-bis(aminomethyl)cyclohexane (1,3-BAC, from Mitsubishi Gas Chem.) were placed in a round bottom flask under nitrogen atmosphere. Then 359.5 g (2.1 mol) 2,2-dimethyl-3-(N-morpholino)propanal were added under good stirring, followed by removing the volatile contents at 80°C and 10 mbar vacuum. The product obtained was a nearly colourless liquid with an amine content of 8.80 mmol N/g, corresponding to a calculated aldimine equivalent weight of approx. 233 g/Eq.

**Aldimine A7:** N,N'-bis(2,2-dimethyl-3-lauroyloxypropylidene)-4,4'-methylene-bis(cyclohexylamine) containing approx. 50% of the trans,trans isomer 42.1 g (0.20 mol) 4,4'-methylene-bis(cyclohexylamine) (Dicykan^{®}, containing approx. 50% of the trans,trans isomer, from BASF) were melted at 60°C and placed in a round bottom flask under nitrogen atmosphere. Then 119.5 g (0.42 mol) 2,2-dimethyl-3-lauroyloxypropanal were added under good stirring, followed by removing the volatile contents at 80°C and 10 mbar vacuum. The product obtained was a clear brownish liquid with a viscosity of 0.52 Pa·s at 20°C and an amine content of 2.59 mmol N/g, corresponding to a calculated aldimine equivalent weight of approx. 386 g/Eq.

### Preparation of isocyanate-functional polyurethane polymers:

The **content of monomeric diisocyanates** was determined with HPLC (detection by photodiode array; 0.04 M sodium acetate / acetonitrile mobile phase) after derivatization with N-propyl-4-nitrobenzylamine.

### Polymer P1

780 g ethyleneoxide-capped polyoxypropylene triol (Desmophen^{®} 5031 BT, OH-number 28.0 mg KOH/g, from Covestro) and 220 g isophorone diisocyanate (Vestanat^{®} IPDI, from Evonik) were reacted at 80°C according to known procedures to form a mixture with an NCO-content of 6.4 weight-% and a content of monomeric isophorone diisocyanate of approximately 12 weight-%. The volatile contents, particularly most of the monomeric isophorone diisocyanate, were then removed from the mixture in a short path evaporator by distillation (jacket temperature 160°C, 0.1 to 0.005 mbar). The polymer obtained had an NCO-content of 1.9 weight-%, a viscosity of 8.2 Pa·s at 20°C and a content of monomeric isophorone diisocyanate of 0.02 weight-%.

### Polymer P2:

818 g polyoxypropylene diol (Acclaim^{®} 4200, OH-number 28.5 mg KOH/g, from Covestro) and 182 g isophorone diisocyanate (Vestanat^{®} IPDI, from Evonik) were reacted at 80°C according to known procedures to form a mixture with an NCO-content of 5.1 weight-% and a content of monomeric isophorone diisocyanate of approximately 9 weight-%. The volatile contents, particularly most of the monomeric isophorone diisocyanate, were then removed from the mixture in a short path evaporator by distillation (jacket temperature 160°C, 0.1 to 0.005 mbar). The polymer obtained had an NCO-content of 1.9 weight-%, a viscosity of 6.5 Pa·s at 20°C and a content of monomeric isophorone diisocyanate of 0.03 weight-%.

### Polymer P3:

600 g polyoxypropylene diol (Voranol^{®} 1010 L, OH-number 112 mg KOH/g, from Dow) and 400 g isophorone diisocyanate (Vestanat^{®} IPDI, from Evonik) were reacted at 80°C according to known procedures to form a mixture with an NCO-content of 10 weight-% and a content of monomeric isophorone diisocyanate of approximately 13 weight-%. The volatile contents, particularly most of the monomeric isophorone diisocyanate, were then removed from the mixture in a short path evaporator by distillation (jacket temperature 160°C, 0.1 to 0.005 mbar). The polymer obtained had an NCO-content of 5.5 weight-%, a viscosity of 21.8 Pa·s at 20°C and a content of monomeric isophorone diisocyanate of 0.03 weight-%.

### Polymer R1:

590 g polyoxypropylene diol (Acclaim^{®} 4200, OH-number 28.5 mg KOH/g, from Covestro), 1180 g ethyleneoxide-capped polyoxypropylene triol (Caradol^{®} MD34-02, OH-number 35.0 mg KOH/g, from Shell) and 230 g isophorone diisocyanate (Vestanat^{®} IPDI, from Evonik) were reacted at 80°C according to known procedures. The polymer obtained had an NCO-content of 2.1 weight-%, a viscosity of 22.5 Pa·s at 20°C and a content of monomeric isophorone diisocyanate of approx. 2 weight-%.

### Polymer R2:

725 g ethyleneoxide-capped polyoxypropylene triol (Desmophen^{®} 5031 BT, OH-number 28.0 mg KOH/g, from Covestro) and 275 g 4,4'-diphenylmethane diisocyanate (Desmodur^{®} 44 MC L, from Covestro) were reacted at 80 °C according to known procedures to form a mixture of an NCO-content of 7.6 weight-% and a content of monomeric 4,4'-diphenylmethane diisocyanate of approximately 20 weight-%. The volatile contents, particularly most of the monomeric 4,4'-diphenylmethane diisocyanate, were then removed from the mixture in a short path evaporator by distillation (jacket temperature 180°C, 0.1 to 0.005 mbar). The polymer obtained had an NCO-content of 1.7 weight-%, a viscosity of 19 Pa·s at 20°C and a content of monomeric 4,4'-diphenylmethane diisocyanate of 0.04 weight-%.

The Polymers **P1** to **P3** are isophorone diisocyanate based polymers with a low content of monomeric diisocyanates.

The Polymer **R1** is an isophorone diisocyanate based conventional polymer with a high content of monomeric diisocyanates.

The Polymer **R2** is a diphenylmethan diisocyanate based polymer with a low content of monomeric diisocyanates.

### Moisture-curing polyurethane compositions:

### Compositions C1 to C12:

Each composition was prepared by mixing the ingredients given in Table 1 or 2 in the given amounts (weight parts) in a centrifugal mixer (SpeedMixer^{™} DAC 150, FlackTek Inc.) under exclusion of moisture, and stored in a moisture-tight container. The solid Aldimine **A2** was melted at 60°C before use.

The compositions were tested as follows:
The **monomer-content** of each composition was calculated from the content in the polymer.

The **viscosity** was measured as previousley described at 20°C after storing the moisture-tight container in normal climate for one day ("1d NC") and again after storing the moisture-tight container in an oven at 60°C for 7 days ("7d 60°C"). A small increase is an indication for a good storage stability.

The **skinning time** (skin formation time) was determined in normal climate by applying a few grams of the composition in a layer tickness of approx. 2 mm on cardboard and gently touching its surface with an LDPE pipette from time to time, until the touching did not leave any polymer residues on the pipette.

The **surface tack** was judged after 12 hours, 24 hours and 2 days curing in normal climate on the samples which were used for the determination of the Shore A hardness.

The **Shore A** hardness was determined according to DIN 53505 with cylindrical samples of 20 mm diameter and a thickness of 5 mm which had been stored in normal climate for 7 days.

To determine the mechanical properties, the composition was poured onto a PTFE coated foil in a layer thickness of approx. 2 mm and stored in normal climate for 7 days, followed by punching dumbell shaped samples out of the cured film with a length of 75 mm at a bridge length of 30 mm and a bridge width of 4 mm. With the so prepared samples, the **tensile strength,** the **elongation** (at break) and the **E-modulus 5%** (from 0.5 to 5% elongation) were determined according to DIN EN 53504 at a crosshead speed of 200 mm/min.

The cured films of all the compositions were homogeneous and bubble-free.

The test results are given in Table 1 and 2.

Reference examples are marked with "(Ref.)".

**Table 1: Composition (in weight parts) and test results of the Compositions C1 to C11. "(Ref.)" means "reference example"**

| **Composition** | | **C1** | **C2** | **C3 (Ref.)** | **C4 (Ref.)** | **C5 (Ref.)** |
|---|---|---|---|---|---|---|
| **Polymer P1** | | 80.00 | 80.00 | 80.00 | - | 80.00 |
| **Polymer R1** | | - | - | - | 80.00 | - |
| **Polymer R2** | | - | - | - | - | - |
| **Aldimine** | | **A1** | **A2** | **A3** | **A3** | **A4** |
| | | 6.41 | 6.41 | 5.93 | 6.91 | 5.26 |
| SA-solution¹ | | 1.50 | 1.50 | 1.50 | 1.50 | 1.50 |
| DBTDL-solution² | | 0.50 | 0.50 | 0.50 | 0.50 | 0.50 |
| monomer-content [weight-%] | | 0.02 (IPDI) | 0.02 (IPDI) | 0.02 (IPDI) | 1.80 (IPDI) | 0.02 (IPDI) |
| viscosity | 1d NC | 10.9 | 10.9 | 9.5 | 18.6 | 11.0 |
| [Pa·s] | 7d 60°C | 16.0 | 14.9 | 13.5 | 21.9 | 42.3 |
| skinning time [min] | | 23 | 23 | 48 | 55 | 15 |
| surface tack | 12h | slight | slight | tacky | slight | tacky |
| | 24h | dry | dry | tacky | dry | tacky |
| | 2d | dry | dry | tacky | dry | tacky |
| tensile strength [MPa] | | 2.62 | 1.64 | 1.63 | 1.34 | 1.24 |
| elongation [%] | | 413 | 290 | 323 | 207 | 274 |
| E-modulus 5% [MPa] | | 1.50 | 1.49 | 1.10 | 1.50 | 0.87 |
| Shore A | | 39 | 39 | 34 | 40 | 31 |

| | | | | | | |
|---|---|---|---|---|---|---|
| ¹ 5 weight-% salicylic acid in dioctyl phthalate ² 5 weight-% dibutyltindilaurate in diisodecylphthalate | | | | | | |

**Table 1: (continued)**

| **Composition** | | **C6 (Ref.)** | **C7 (Ref.)** | **C8 (Ref.)** | **C9 (Ref.)** | **C10 (Ref.)** |
|---|---|---|---|---|---|---|
| **Polymer P1** | | 80.00 | 80.00 | - | - | - |
| **Polymer R1** | | - | - | - | - | - |
| **Polymer R2** | | - | - | 80.00 | 80.00 | 80.00 |
| **Aldimine** | | **A5** | **A7** | **A1** | **A2** | **A3** |
| | | 7.68 | 9.26 | 5.93 | 5.93 | 5.48 |
| SA-solution¹ | | 1.50 | 1.50 | 1.50 | 1.50 | 1.50 |
| DBTDL-solution² | | 0.50 | 0.50 | - | - | - |
| monomer-content [weight-%] | | 0.02 (IPDI) | 0.02 (IPDI) | 0.04 (MDI) | 0.04 (MDI) | 0.04 (MDI) |
| viscosity | 1d NC | 10.5 | 8.1 | 29.8 | 29.7 | 25.6 |
| [Pa·s] | 7d 60°C | 22.5 | 11.0 | cured | cured | cured |
| skinning time [min] | | 13 | 40 | 7 | 7 | 9 |
| surface tack | 12h | slight | slight | slight | slight | tacky |
| | 24h | slight | dry | slight | slight | tacky |
| | 2d | slight | dry | slight | slight | slight |
| tensile strength [MPa] | | 0.95 | 2.10 | 0.86 | 0.90 | 0.83 |
| elongation [%] | | 114 | 371 | 144 | 140 | 172 |
| E-modulus 5% [MPa] | | 1.34 | 1.35 | 1.28 | 1.33 | 1.01 |
| Shore A | | 41 | 37 | 38 | 39 | 34 |

**Table 2: Composition (in weight parts) and test results of the Compositions C1, C3, C11 and C12. "(Ref.)" means "reference example"**

| **Composition** | | **C3 (Ref.)** | **C11** | **C12** | **C1** |
|---|---|---|---|---|---|
| **Polymer P1** | | 80.00 | 80.00 | 80.00 | 80.00 |
| **Aldimine** | | **A3** 5.93 | **A1** 3.08 | **A1** 4.72 | **A1** 6.41 |
| | | | **A3** 3.08 | **A3** 1.57 | |
| SA-solution¹ | | 1.50 | 1.50 | 1.50 | 1.50 |
| DBTDL-solution² | | 0.50 | 0.50 | 0.50 | 0.50 |
| weight ratio **A1/A3** | | 0/100 | 50/50 | 75/25 | 100/0 |
| viscosity | 1d NC | 9.5 | 9.8 | 10.4 | 10.9 |
| [Pa·s] | 7d 60°C | 13.5 | 15.0 | 15.9 | 16.0 |
| skinning time [min] | | 48 | 29 | 25 | 23 |
| surface tack | 12h | tacky | tacky | tacky | slight |
| | 24h | tacky | slight | slight | dry |
| | 2d | tacky | slight | slight | dry |
| tensile strength [MPa] | | 1.63 | 2.59 | 2.66 | 2.62 |
| elongation [%] | | 323 | 434 | 438 | 413 |
| E-modulus 5% [MPa] | | 1.10 | 1.31 | 1.39 | 1.50 |
| Shore A | | 33.5 | 36.1 | 37.4 | 38.7 |

| | | | | | |
|---|---|---|---|---|---|
| ¹ 5 weight-% salicylic acid in dioctyl phthalate ² 5 weight-% dibutyltindilaurate in diisodecylphthalate | | | | | |

### Moisture-curing polyurethane adhesives:

### Compositions C13 to C16:

Each composition was prepared by mixing the ingredients given in Table 3 in the given amounts (weight parts) with a planetary mixer under vacuum and exclusion of moisture, followed by storing it in a moisture-tight container.

The solid Aldimine **A2** was melted at 60°C before adding.

The ***thickening paste*** was prepared by placing 300 g diisodecyl phthalate and 48 g 4,4'-diphenylmethane diisocyanate (Desmodur^{®} 44 MC L, from Covestro) in a vacuum mixer, heating the mixture to 40°C, followed by adding 27 g monobutyl amine dropwise under vigorous stirring. The resulting paste was further stirred under vacuum and cooling for one hour.

The compositions were tested as follows:
The **monomer-content** of each composition was calculated from the content in the polymer and the IPDI-isocyanurate.

The **skinning time** (skin formation time) and the **Shore A** hardness were determined as described for composition **C1.**

To determine the mechanical properties, each composition was pressed between two wax-coated transfer printing papers to form a film of 2 mm thickness and stored in normal climate. After removing the wax-coated papers, dumbell shaped samples were punched from the cured film and tested for **tensile strength, elongation** and **E-modulus 5%** as described for composition **C1.**

The cured films of all the adhesives were homogeneous and bubble-free.

The test results are given in Table 3.

Reference examples are marked with **"(Ref.)".**

**Table 3: Composition (in weight parts) and test results of the Compositions C13 to C16. "(Ref.)" means "reference example"**

| **Composition** | **C13** | **C14** | **C15** | **C16 (Ref.)** |
|---|---|---|---|---|
| Polymer **P1** | 27.5 | 27.5 | 27.5 | 27.5 |
| IPDI-Isocyanurate¹ | 0.5 | 0.5 | 0.5 | 0.5 |
| DIDP² | 4.0 | 4.0 | 4.0 | 4.0 |
| Aldimine | A1 2.9 | **A1** 0.6 | **A2** 2.9 | **A3** 2.8 |
| | | **A3** 2.2 | | |
| *thickening paste* | 25.0 | 25.0 | 25.0 | 25.0 |
| chalk³ | 33.6 | 33.7 | 33.6 | 33.7 |
| titanium dioxide | 6.0 | 6.0 | 6.0 | 6.0 |
| SA-solution⁴ | 0.50 | 0.50 | 0.50 | 0.50 |
| weight ratio **A1/A3** | - | 21/79 | - | - |
| monomer-content [weight-%] | 0.01 (IPDI) | 0.01 (IPDI) | 0.01 (IPDI) | 0.01 (IPDI) |
| skinning time [min] | n.d.⁵ | n.d.⁵ | 40 | 55 |
| tensile strength [MPa] | 3.2 | 3.2 | 2.6 | 2.8 |
| elongation [%] | 640 | 675 | 585 | 780% |
| E-modulus 5% [MPa] | 4.9 | 3.6 | 3.0 | 2.2 |
| Shore A | 41 | 39 | 41 | 37 |

| | | | | |
|---|---|---|---|---|
| ¹ Vestanate^{®} T1890/100 (from Evonik), NCO-content 17.3 weight-%, approx. 0.5 weight-% monomeric IPDI ² diisodecyl phthalate ³ Omya^{®} BLH (from Omya) ⁴ 5 weight-% dibutyltin dilaurate in diisodecyl phthalate ⁵ not determined | | | | |

### Moisture-curing polyurethane coatings:

### Compositions C17 to C22:

Each composition was prepared by mixing the ingredients given in Table 4 in the given amounts (weight parts) in the centrifugal mixer under exclusion of moisture, and stored in a moisture-tight cotainer. Prior to use, the solid Aldimine **A2** was melted at 60°C, while salicylic acid was dissolved in 1-methoxy-2-propylacetate.

The compositions were tested as follows:
The **monomer-content** of each composition was calculated from the content in the polymer and the IPDI-isocyanurate solution.

The **viscosity** was measured at a temperature of 20°C with a Rotothinner type viscometer with the spherical spindle DV2011 at 500 rpm, a first time after storing the moisture-tight container in normal climate for 1 day ("1d NC"), and again after storing the moisture-tight container in an oven at 40°C for 21 days ("21d 40°C"). Cure speed **("BK drying time")** was determined at 20°C / 45% relative humidity using a Beck-Koller drying time recorder according to ASTM D5895.

To determine the mechanical properties, a two-layer cured film was prepared for each coating. To prepare the film, a first layer of 800 µm thickness was applied with a draw down bar and left curing in normal climate (NC) for 24 h; then a second layer of 400 µm thickness was applied thereon at an angle of 90° and again left curing in NC for 24 h; the two-layer film was then placed in an oven at 60°C for 72 h. After an additional 24 h in NC, bar shaped test items with a length of 100 mm and a width of 25 mm were punched from the film and the **tensile strength,** the **elongation at break** and **Young's modulus** were determined according to BS EN ISO 527-3 at a crosshead speed of 180 mm/min.

The cured films of all the coatings were homogeneous and bubble-free.

The results are given in Table 4.

Reference examples are marked with **"(Ref.)".**

**Table 4: Composition (in weight parts) and test results of the Compositions C17 to C22. "(Ref.)" means "reference example"**

| **Composition** | | **C17** | **C18** | **C19** | **C20 (Ref.)** | **C21 (Ref.)** | **C22 (Ref.)** |
|---|---|---|---|---|---|---|---|
| Polymer **P2** | | 21.72 | 21.72 | 21.72 | 21.72 | 21.72 | 21.72 |
| Polymer **P3** | | 10.86 | 10.86 | 10.86 | 10.86 | 10.86 | 10.86 |
| IPDI-Isocyanurate solution¹ | | 3.35 | 3.35 | 3.35 | 3.35 | 3.35 | 3.35 |
| **Aldimine** | | **A2** 4.78 | **A2** 2.26 | **A1** 2.26 | **A3** 4.40 | **A4** 4.06 | **A6** 4.22 |
| | | **A5** 2.91 | **A3** 2.26 | **A3** 2.26 | **A5** 3.01 | **A5** 2.71 | **A5** 2.81 |
| | | | **A5** 3.01 | **A5** 3.01 | | | |
| 1-methoxy-2-propyl acetate | | 21.05 | 21.05 | 21.05 | 21.05 | 21.05 | 21.05 |
| ATH² | | 21.63 | 21.79 | 21.79 | 21.91 | 22.55 | 22.29 |
| titanium dioxide | | 4.93 | 4.93 | 4.93 | 4.93 | 4.93 | 4.93 |
| barytes | | 2.80 | 2.80 | 2.80 | 2.80 | 2.80 | 2.80 |
| fumed silica | | 2.02 | 2.02 | 2.02 | 2.02 | 2.02 | 2.02 |
| additives | | 3.87 | 3.87 | 3.87 | 3.87 | 3.87 | 3.87 |
| salicylic acid | | 0.08 | 0.08 | 0.08 | 0.08 | 0.08 | 0.08 |
| monomer-content [weight-%] | | 0.02 (IPDI) | 0.02 (IPDI) | 0.02 (IPDI) | 0.02 (IPDI) | 0.02 (IPDI) | 0.02 (IPDI) |
| viscosity | 1d NC | 16 | 14 | 14 | n.d.³ | n.d.³ | n.d.³ |
| [Poise] | 21d 40°C | 31 | 22 | 21 | | | |
| BK drying time: | | | | | | | |
| [h] | gel-time | 1.75 | 2 | 2 | 1.75 | 1.75 | 2 |
| | skinning-time | 4 | 5 | 5 | 7.5 | 4.5 | 7 |
| | dry-time | 12 | 12 | 12 | 72 | 12 | 24 |
| tensile strength [MPa] | | 6.4 | 6.6 | 7.6 | 5.8 | 6.0 | 5.6 |
| elongation at break [%] | | 610 | 575 | 600 | 620 | 590 | 605 |
| Young's modulus [MPa] | | 19.4 | 19.2 | 25.2 | 19.2 | 7.9 | 9.9 |

| | | | | | | | |
|---|---|---|---|---|---|---|---|
| ¹ Desmodur^{®} Z 4470SN (70 weight-% in solventnaphtha 100, NCO-content 12.0 weight-%, approx. 0.35 weight-% monomeric IPDI, from Covestro) ² aluminium trihydroxide filler ³ not determined | | | | | | | |

## Claims

1. Moisture-curing polyurethane composition comprising
- at least one isocyanate-functional polymer with a content of monomeric isophorone diisocyanate of below 0.5 weight-%, obtained from the reaction of isophorone diisocyanate and at least one polyol, and
- at least one aldimine of the formula (I), 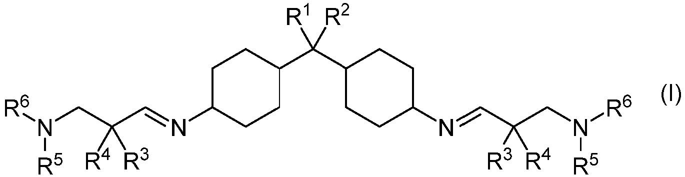 wherein
R¹ and R² are independently of each other hydrogen or methyl,
R³ and R⁴ are the same or different C₁ to C₄ alkyls, or are joined together to form a C₄ to C₆ alkylene, and
R⁵ and R⁶ are the same or different C₁ to C₈ alkyls optionally containing ether oxygen, or are joined together to form a C₄ to C₆ alkylene optionally containing ether oxygen, and
containing at least one further ingredient selected from the group consisting of latent hardeners different from aldimines of the formula (I), oligomeric polyisocyanates and stabilizers.

2. Composition according to claim 1, wherein the aldimine of the formula (I) is liquid at 23°C.

3. Composition according to any one of claims 1 to 2, wherein R¹ and R² are both hydrogen.

4. Composition according to any one of claims 1 to 3, wherein R³ and R⁴ are both methyl and R⁵ and R⁶ are together a 3-oxa-1,5-pentylen group, which forms together with the nitrogen atom, to which R⁵ and R⁶ are bonded, a morpholine ring.

5. Composition according to any one of claims 1 to 4, wherein the aldimine is a mixture of isomeric aldimines containing less than 35%, preferably less than 30%, more preferably at most 25%, of the trans,trans isomer.

6. Composition according to any one of claims 1 to 5, wherein the isocyanate-functional polymer has a content of monomeric isophorone diisocyanate of below 0.3 weight-% and an NCO-content in the range of 1 to 10 weight-%, which is obtained from the reaction of isophorone diisocyanate and at least one polyether polyol with an OH-number in the range of 10 to 250 mg KOH/g in a molar NCO/OH-ratio in the range of 3/1 to 10/1, followed by removing most of the monomeric isophorone diisocyanate by a distillation process.

7. Composition according to any one of claims 1 to 6, containing an amount of monomeric diisocyanates of below 0.1 weight-% in relation to the total composition.

8. Composition according to any one of claims 1 to 7, containing at least one hardener different from aldimines of the formula (I), which is at least one aldimine of the formula (Va), 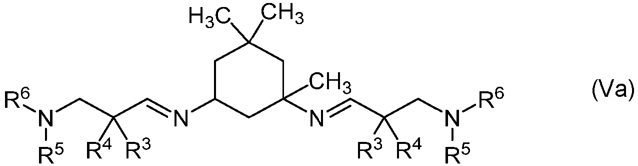 wherein
R³ and R⁴ are the same or different C₁ to C₄ alkyls, or are joined together to form a C₄ to C₆ alkylene,
R⁵, R⁶ are the same or different C₁ to C₈ alkyls optionally containing ether oxygen, or are joined together to form a C₄ to C₆ alkylene optionally containing ether oxygen.

9. Composition according to claim 8, wherein the weight ratio between the aldimine of the formula (I) and the aldimine of the formula (Va) is in the range of 10/90 to 80/20, preferably 20/80 to 75/25.

10. Composition according to any one of claims 1 to 9, containing at least one oligomeric polyisocyanate, which is at least one oligomer of isophorone diisocyanate.

11. Cured composition, obtained from the composition according to any one of claims 1 to 10 after its contact with moisture.

12. Method to make an elastic adhesive or sealing bond, comprising the steps of
(i) applying the composition according to any one of claims 1 to 10
- onto a first substrate and contacting the composition with a second substrate within the open time of the composition, or
- onto a first and onto a second substrate and join the two substrates within the open time of the composition, or
- between two substrates,
(ii) followed by curing the composition by contact with moisture.

13. Method to make an elastic coating and/or sealing, comprising the steps of
(i) applying the composition according to any one of claims 1 to 10 onto a substrate
(ii) curing the composition by contact with moisture.

14. Waterproofing system, consisting of
- optionally a primer and/or an undercoat,
- one or more than one layer of the composition according to any one of claims 1 to 11, optionally in combination with a fibre reinforcement mesh,
- and optionally a topcoat.

## Patentansprüche

1. Feuchtigkeitshärtende Polyurethanzusammensetzung, umfassend
- mindestens ein isocyanatfunktionelles Polymer mit einem Gehalt an monomerem Isophorondiisocyanat von unter 0,5 Gew.-%, das aus der Umsetzung von Isophorondiisocyanat und mindestens einem Polyol erhalten wird, und
- mindestens ein Aldimin der Formel (I), 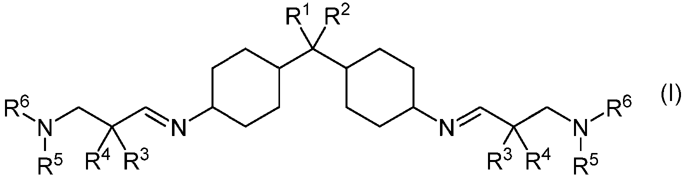 wobei
R¹ und R² unabhängig voneinander Wasserstoff oder Methyl sind,
R³ und R⁴ gleiche oder verschiedene C₁- bis C₄-Alkyle sind oder miteinander verbunden sind, um ein C₄- bis C₆-Alkylen zu bilden, und
R⁵ und R⁶ gleiche oder verschiedene C₁- bis C₈-Alkyle sind, die gegebenenfalls Ethersauerstoff enthalten, oder miteinander verbunden sind, um ein C₁- bis C₆-Alkylen zu bilden, das gegebenenfalls Ethersauerstoff enthält, und enthaltend mindestens einen weiteren Inhaltsstoff ausgewählt aus der Gruppe bestehend aus latenten Härtern, die von Aldiminen der Formel (I) verschieden sind, oligomeren Polyisocyanaten und Stabilisatoren.

2. Zusammensetzung nach Anspruch 1, wobei das Aldimin der Formel (I) bei 23 °C flüssig ist.

3. Zusammensetzung nach einem der Ansprüche 1 bis 2, wobei R¹ und R² beide Wasserstoff sind.

4. Zusammensetzung nach einem der Ansprüche 1 bis 3, wobei R³ und R⁴ beide Methyl sind und R⁵ und R⁶ zusammen eine 3-Oxa-1,5-pentylengruppe sind, die zusammen mit dem Stickstoffatom, an das R⁵ und R⁶ gebunden sind, einen Morpholinring bildet.

5. Zusammensetzung nach einem der Ansprüche 1 bis 4, wobei das Aldimin eine Mischung isomerer Aldimine ist, die weniger als 35 %, vorzugsweise weniger als 30 %, besonders bevorzugt höchstens 25 % des trans,trans-Isomers enthält.

6. Zusammensetzung nach einem der Ansprüche 1 bis 5, wobei das isocyanatfunktionelle Polymer einen Gehalt an monomerem Isophorondiisocyanat von unter 0,3 Gew.-% und einen NCO-Gehalt im Bereich von 1 bis 10 Gew.-% aufweist, und aus der Umsetzung von Isophorondiisocyanat und mindestens einem Polyetherpolyol mit einer OH-Zahl im Bereich von 10 bis 250 mg KOH/g in einem molaren NCO/OH-Verhältnis im Bereich von 3/1 bis 10/1 erhalten wird, gefolgt von Entfernung des größten Teils des monomeren Isophorondiisocyanats durch einen Destillationsprozess.

7. Zusammensetzung nach einem der Ansprüche 1 bis 6, enthaltend eine Menge an monomeren Diisocyanaten von unter 0,1 Gew.-%, bezogen auf die Gesamtzusammensetzung.

8. Zusammensetzung nach einem der Ansprüche 1 bis 7, enthaltend mindestens einen Härter, der von Aldiminen der Formel (I) verschieden ist, bei dem es sich um mindestens ein Aldimin der Formel (Va) handelt, 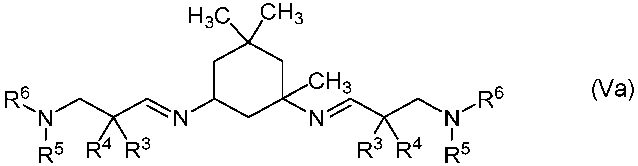 wobei
R³ und R⁴ gleiche oder verschiedene C₁- bis C₄-Alkyle sind oder miteinander verbunden sind, um ein C₄- bis C₆-Alkylen zu bilden,
R⁵, R⁶ gleiche oder verschiedene C₁- bis C₈-Alkyle sind, die gegebenenfalls Ethersauerstoff enthalten, oder miteinander verbunden sind, um ein C₄- bis C₆-Alkylen zu bilden, das gegebenenfalls Ethersauerstoff enthält.

9. Zusammensetzung nach Anspruch 8, wobei das Gewichtsverhältnis zwischen dem Aldimin der Formel (I) und dem Aldimin der Formel (Va) im Bereich von 10/90 bis 80/20, vorzugsweise 20/80 bis 75/25 liegt.

10. Zusammensetzung nach einem der Ansprüche 1 bis 9, enthaltend mindestens ein oligomeres Polyisocyanat, bei dem es sich um mindestens ein Oligomer von Isophorondiisocyanat handelt.

11. Gehärtete Zusammensetzung, die aus der Zusammensetzung nach einem der Ansprüche 1 bis 10 nach ihrem Kontakt mit Feuchtigkeit erhalten wird.

12. Verfahren zur Herstellung einer elastischen Klebe- oder Abdichtverbindung, umfassend die Schritte:
(i) Auftragen der Zusammensetzung nach einem der Ansprüche 1 bis 10
- auf ein erstes Substrat, und Kontaktieren der Zusammensetzung mit einem zweiten Substrat innerhalb der offenen Zeit der Zusammensetzung, oder
- auf ein erstes und auf ein zweites Substrat, und Anfügen der beiden Substrate aneinander innerhalb der offenen Zeit der Zusammensetzung, oder
- zwischen zwei Substraten,
(ii) gefolgt von Härten der Zusammensetzung durch Kontakt mit Feuchtigkeit.

13. Verfahren zur Herstellung einer elastischen Beschichtung und/oder Abdichtung, umfassend die Schritte:
(i) Auftragen der Zusammensetzung nach einem der Ansprüche 1 bis 10 auf ein Substrat
(ii) Härten der Zusammensetzung durch Kontakt mit Feuchtigkeit.

14. Wasserabdichtungssystem, bestehend aus
- gegebenenfalls einer Grundierung und/oder einer Unterschicht,
- einer oder mehr als einer Schicht der Zusammensetzung nach einem der Ansprüche 1 bis 11, gegebenenfalls in Kombination mit einem Faserverstärkungsnetz,
- und gegebenenfalls einer Deckschicht.

## Revendications

1. Composition de polyuréthane durcissant à l'humidité comprenant
- au moins un polymère à fonction isocyanate ayant une teneur en diisocyanate d'isophorone monomérique inférieure à 0,5 % en poids, obtenu à partir de la réaction de diisocyanate d'isophorone et d'au moins un polyol, et
- au moins une aldimine de la formule (I), 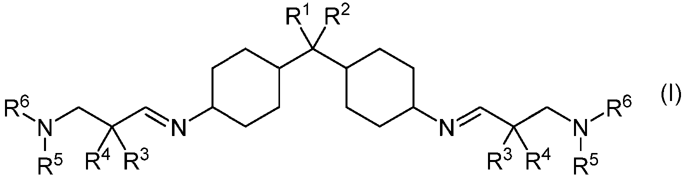 dans laquelle
R¹ et R² sont, indépendamment l'un de l'autre, hydrogène ou méthyle,
R³ et R⁴ sont les mêmes ou différents alkyles en C₁ à C₄, ou sont joints pour former un alkylène en C₄ à C₆, et
R⁵ et R⁶ sont les mêmes ou différents alkyles en C₁ à C₈ contenant éventuellement un oxygène d'éther, ou sont joints pour former un alkylène en C₄ à C₆ contenant éventuellement un oxygène d'éther, et
contenant au moins un autre ingrédient choisi dans un groupe constitué de durcisseurs latents différents des aldimines de la formule (I), de polyisocyanates oligomériques et de stabilisants.

2. Composition selon la revendication 1, dans laquelle l'aldimine de la formule (I) est liquide à 23 °C.

3. Composition selon l'une quelconque des revendications 1 à 2, dans laquelle R¹ et R² sont tous deux hydrogènes.

4. Composition selon l'une quelconque des revendications 1 à 3, dans laquelle R³ et R⁴ sont tous deux méthyles et R⁵ et R⁶, pris ensemble, forment un groupe 3-oxa-1,5-pentylène, qui forme avec l'atome d'azote, auquel R⁵ et R⁶ sont liés, un cycle morpholine.

5. Composition selon l'une quelconque des revendications 1 à 4, dans laquelle l'aldimine est un mélange d'aldimines isomériques contenant moins de 35 %, de préférence moins de 30 %,plus préférablement maximum 25 %, de l'isomère trans,trans.

6. Composition selon l'une quelconque des revendications 1 à 5, dans laquelle le polymère à fonction isocyanate a une teneur en diisocyanate d'isophorone monomérique inférieure à 0,3 % en poids et une teneur en NCO comprise entre 1 et 10 % en poids, qui est obtenue à partir de la réaction de diisocyanate d'isophorone et d'au moins un polyéther polyol ayant un indice d'OH compris entre 10 et 250 mg KOH/g en un rapport molaire NCO/OH compris entre 3/1 et 10/1, suivie par l'élimination de la majeure partie du diisocyanate d'isophorone monomérique par un processus de distillation.

7. Composition selon l'une quelconque des revendications 1 à 6, contenant une quantité de diisocyanates monomériques inférieure à 0,1 % en poids par rapport à la composition totale.

8. Composition selon l'une quelconque des revendications 1 à 7, contenant au moins un durcisseur différent des aldimines de la formule (I), qui est au moins une aldimine de la formule (Va), 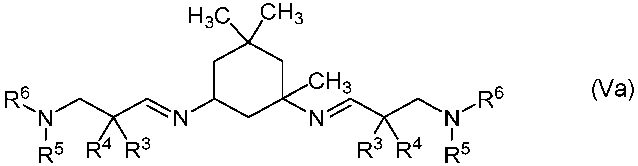 dans laquelle
R³ et R⁴ sont les mêmes ou différents alkyles en C₁ à C₄, ou sont joints pour former un alkylène en C₄ à C₆
R⁵ et R⁶ sont les mêmes ou différents alkyles en C₁ à C₈ contenant éventuellement un oxygène d'éther, ou sont joints pour former un alkylène en C₄ à C₆ contenant éventuellement un oxygène d'éther.

9. Composition selon la revendication 8, dans laquelle le rapport pondéral entre l'aldimine de la formule (I) et l'aldimine de la formule (Va) est compris entre 10/90 et 80/20, de préférence entre 20/80 et 75/25.

10. Composition selon l'une quelconque des revendications 1 à 9, contenant au moins un polyisocyanate oligomérique, qui est au moins un oligomère de diisocyanate d'isophorone.

11. Composition durcie, obtenue à partir de la composition selon l'une quelconque des revendications 1 à 10 après sa mise en contact avec de l'humidité.

12. Procédé de fabrication d'un adhésif ou d'une liaison d'étanchéité élastique, comprenant les étapes de
(i) application de la composition selon l'une quelconque des revendications 1 à 10
- sur un premier substrat et mise en contact de la composition avec un second substrat au cours du temps ouvert de la composition, ou
- sur un premier et sur un second substrat et assemblage des deux substrats au cours du temps ouvert de la composition, ou
- entre deux substrats,
(ii) suivie par le durcissement de la composition par mise en contact avec de l'humidité.

13. Procédé de fabrication d'un revêtement et/ou scellement élastique, comprenant les étapes de
(i) application de la composition selon l'une quelconque des revendications 1 à 10 sur un substrat
(ii) durcissement de la composition par mise en contact avec de l'humidité.

14. Système d'étanchéité à l'eau, constitué de
- éventuellement un apprêt et/ou une sous-couche,
- une ou plusieurs couches de la composition selon l'une quelconque des revendications 1 à 11, éventuellement en combinaison avec un treillis de renforcement de fibres,
- et éventuellement une couche de finition.
